(19) Europäisches Patentamt
European Patent Office
Office européen des brevets

(11) **EP 4 067 719 B1**

(12) **EUROPEAN PATENT SPECIFICATION**

(45) Date of publication and mention
of the grant of the patent:
**04.10.2023 Bulletin 2023/40**

(21) Application number: **21425014.4**

(22) Date of filing: **29.03.2021**

(51) International Patent Classification (IPC):
$F28F\ 9/02^{(2006.01)}$    $F16L\ 15/04^{(2006.01)}$
$F28F\ 11/04^{(2006.01)}$    $F16L\ 55/11^{(2006.01)}$
$F16B\ 13/00^{(2006.01)}$    $F28F\ 11/02^{(2006.01)}$
$F16L\ 15/00^{(2006.01)}$    $F16B\ 43/00^{(2006.01)}$
$F16L\ 19/00^{(2006.01)}$    $F16B\ 5/02^{(2006.01)}$

(52) Cooperative Patent Classification (CPC):
**F28F 9/02; F16B 43/001;** F16B 5/02; F16L 55/1108;
F28F 9/0219; F28F 11/02; F28F 11/04;
F28F 2220/00

(54) **IMPROVED SEALING DEVICE FOR BORES OF A HEAT EXCHANGER**

VERBESSERTE DICHTUNGSVORRICHTUNG FÜR BOHRLÖCHER EINES WÄRMETAUSCHERS

DISPOSITIF D'ÉTANCHÉITÉ AMÉLIORÉ POUR LES ALÉSAGES D'UN ÉCHANGEUR DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.10.2022 Bulletin 2022/40**

(73) Proprietor: **ALFA LAVAL OLMI S.p.A.
24040 Suisio (BG) (IT)**

(72) Inventor: **Gozzini, Alberto
24040 Suisio (BG) (IT)**

(74) Representative: **Alfa Laval Attorneys
Alfa Laval Corporate AB
Patent Department
P.O. Box 73
221 00 Lund (SE)**

(56) References cited:
**EP-A2- 0 482 865**    **DE-A1- 10 032 193**
**US-A- 5 979 910**    **US-A1- 2005 121 091**
**US-A1- 2011 240 278**

## Description

### Field of the invention

The present invention refers in general to an improved sealing device for bores of a heat exchanger and, more specifically but not exclusively, to an improved sealing device designed for sealing the bores of the plug-type box header of an air-cooled heat exchanger.

### Background of the invention

Typically, an air-cooled heat exchanger comprises a tube bundle with parallelepiped shaped headers on both ends of the tubes. Cooling air is provided by one or more fans. Usually, the tube bundle is horizontally disposed and the air blows upwards through the tube bundle. Headers have the purpose of distributing the fluid from the piping to the tubes of the heat exchanger. Almost all headers of air-cooled heat exchangers comprise welded parallelepiped boxes, also called box headers.

A vast majority of the box headers are of the plug type. This means that, for each tube connected to one wall or sheet (that is, the tube-sheet) of the box header there is a corresponding bore obtained on the opposite wall or sheet (that is, the plug-sheet) of said box header. The plug-sheet bores are used in the manufacturing process of the heat exchanger, for example to obtain the tube-to-tube-sheet joints by welding.

Once the tube-to-tube-sheet joints have been made, each plug-sheet bore is typically sealed with a respective sealing device comprising at least one plug and at least one gasket. If the sealing devices are removed from the box header, the respective plug-sheet bores therefore remain available for further inspection, maintenance and/or repair operations on the heat exchanger, for example to have access to the tube-sheet from the plug-sheet side for inspection and cleaning of individual tubes. EP 0 482 865 A2 discloses a sealing device according to the preamble of claim 1, which uses a push device to apply pressure on a gasket.

The plug-sheet bores and the respective sealing devices are usually the weakest point of the header of a heat exchanger. Traditionally, there are two standard configurations for these sealing devices, that is:

- single plug configuration;
- double plug configuration.

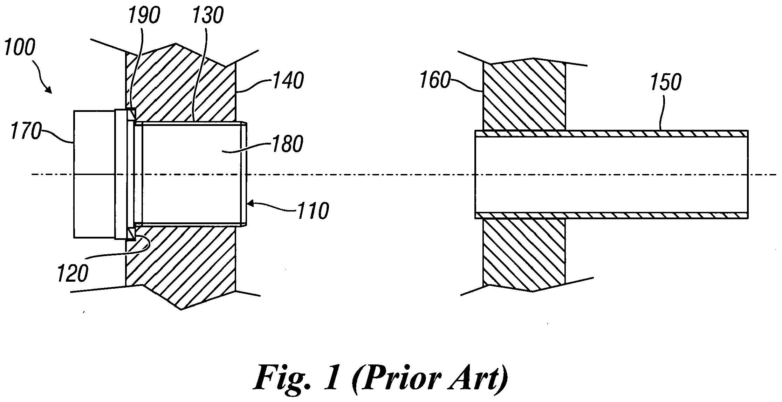

A single plug configuration is shown in figure 1. In figure 1 a sealing device 100, comprising a plug 110 and a gasket 120, is inserted into a bore 130 of the plug-sheet 140 of a box header. The bore 130 is axially aligned with a tube 150 which is integrally joined with the tube-sheet 160 of the box header. The plug 110 has a bolt shape and is provided with a head 170, which protrudes from the bore 130 at the outer side of the box header plug-sheet 140, and with a threaded shank 180, which is inserted into the bore 130 in a threaded coupling. The annular shaped gasket 120 is arranged around the threaded shank 180 and is placed at the head 170 of the plug 110. This annular shaped gasket 120 is designed to be inserted into an enlarged portion 190 of the bore 130 when the plug 110 is in its operating or sealing position (that is, the position shown in figure 1), as well as to perform a sealing action due to the compression force exerted by the head 170 after the shank 180 has been screwed into the bore 130.

Therefore, in the single plug configuration shown in figure 1 there are two possible annular paths for the leakage, through the mating threads of the bore 130 and the shank 180 and downstream said threads, of the fluids contained in the box header. The first annular path is located between the radially oriented portion of the gasket 120 facing a corresponding radially oriented portion of the enlarged portion 190 of the bore 130. The second annular path, which follows the first one, is located between the axially oriented portion of the gasket 120 facing a corresponding axially oriented portion of the enlarged portion 190 of the bore 130. In other words, this second annular path is located around the circumferential edge of the gasket 120. Additionally, in the single plug configuration shown in figure 1 the annular shaped gasket 120 is subject to both frictional and torsional stresses when the shank 180 of the plug 110 is screwed into the bore 130, as well as to a compression stress which increase as the sealing capacity of said annular shaped gasket 120 increases, but which can also lead to the breakage of said annular shaped gasket 120 if the shank 180 of the plug 110 is subjected to excessive torque inside the bore 130.

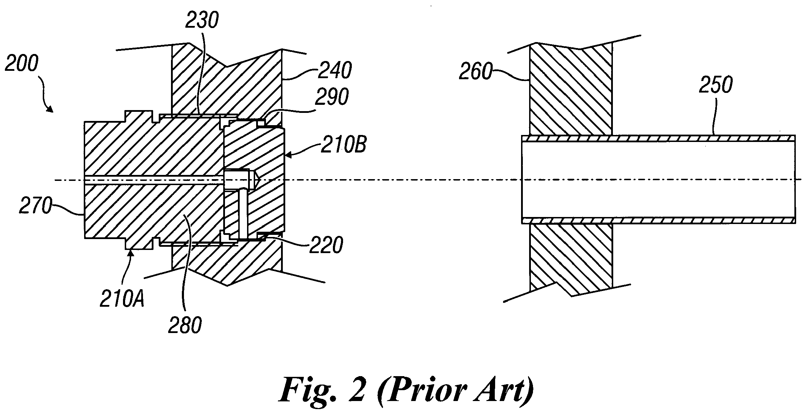

A double plug configuration is shown in figure 2. In figure 2 a sealing device 200, comprising a first plug 210A, a second plug 210B and a gasket 220, is inserted into a bore 230 of the plug-sheet 240 of a box header. The bore 230 is once again axially aligned with a tube 250 which is integrally joined with the tube-sheet 260 of the box header. The first plug 210A has a bolt shape and is provided with a head 270, which protrudes from the bore 230 at the outer side of the box header plug-sheet 240, and with a threaded shank 280, which is inserted into the bore 230 in a threaded coupling. The first plug 210A axially pushes the second plug 210B inside the bore 230. In other words, the second plug 210B does not rotate inside the bore 230, since said second plug 210B has no thread on its outer circumferential surface.

The annular shaped gasket 220 is arranged around a circumferential surface portion of the second plug 210B having a reduced diameter and abuts against another circumferential surface portion of said second plug 210B having an enlarged diameter. This annular shaped gasket 220 is designed to be inserted into a corresponding shaped portion 290 of the bore 230 when both the first plug 210A and the second plug 210B are in their operating or sealing position (that is, the position shown in figure 2), as well as to perform a sealing action due to the compression force exerted by the second plug 210B against the shaped portion 290 of the bore 230 after the shank 280 of the first plug 210A has been screwed into the bore 230.

Therefore, in the double plug configuration shown in figure 2 there are once again two possible annular paths for the leakage of the fluids contained in the box header. These two possible annular paths are conceptually the same as those described above with reference to the single plug configuration. On the contrary, in the double plug configuration shown in figure 2 the annular shaped gasket 220 is subject to less frictional and torsional stresses with respect to those of the annular shaped gasket 120 described above, since the second plug 210B is simply pushed inside the bore 230 and does not rotate therein (or undergoes a very limited rotation). However, the compression stress on the annular shaped gasket 220 is more or less the same as that of the annular shaped gasket 120 described above with reference to the single plug configuration. Additionally, it should be noted that the double plug configuration shown in figure 2 is more complicated and more expensive than the single plug configuration shown in figure 1.

Regardless of the plug configuration, all plug-type sealing devices assembled everywhere on the header of a heat exchanger are always possible points of leakage. These leakages, and leakage in general, are not due to a weak design of the sealing devices, but they are matter of imperfections, misalignments, fabrication tolerances, mounting tolerances, corrosion after operation, vibrations, and many other unpredictable reasons. In other words, the leakage of each sealing device is something related to probability and statistic. Actually, it should be kept in mind that in the header of a heat exchanger, except for welded joints, at least fugitive emissions are always present at any junction.

In general, during the design of a sealing device the solution is often to apply very close construction tolerance to the components of said sealing device, to issue proper assembly instruction and to prescribe some leakage test. However, in field the solution is often to increase the tightening load, but this could lead to an excessive mechanical stress to the components of the sealing device and smashing of the gasket.

## Summary of the invention

One object of the present invention is therefore to provide an improved sealing device for bores of a heat exchanger which is capable of resolving the drawbacks of the prior art in a simple, inexpensive and particularly functional manner.

In detail, one object of the present invention is to provide an improved sealing device for bores of a heat exchanger which is capable of reducing leakages, with respect to the sealing devices according to the prior art, by modifying the design of the gasket and of the sealing device as a whole.

Another object of the present invention is to provide an improved sealing device for bores of a heat exchanger which is capable of reducing the stresses on the gasket while maintaining high sealing performances.

These objects are achieved according to the present invention by providing an improved sealing device for bores of a heat exchanger as set forth in the attached claims.

Further features of the invention are underlined by the dependent claims, which are an integral part of the present description.

The sealing device for bores according to the present invention is designed in particular for sealing bores obtained on a header portion of a heat exchanger. The sealing device comprises at least one bolt-type plug, which is provided with a head and with a substantially cylindrical shank. The shank has a threaded side surface, as well as a base surface which is substantially perpendicular to a central rotation axis of the plug. The plug is designed to be inserted into a corresponding bore in a threaded coupling. The sealing device also comprises at least one disk-shaped gasket having a predefined thickness, wherein said disk-shaped gasket is provided with a substantially flat and solid seal surface and with a substantially flat and solid contact surface, which is opposite to the seal surface. The sealing device further comprises at least one pusher assembly, which is interposed between the bolt-type plug and the disk-shaped gasket along the central rotation axis.

The pusher assembly comprises at least one disk-shaped anti-rotational pusher, which is provided with at least one first projection, having a first predefined thickness and comprising a pusher surface, and with at least one second projection, opposite the pusher surface and having a second predefined thickness. The second projection has the shape of any three-dimensional figure which is not axially symmetric around the central rotation axis. The pusher assembly also comprises at least one circumferentially threaded ring, having a predefined thickness which is smaller than the second predefined thickness of the second projection. The ring is provided with at least one through opening having a shape that is geometrically similar to the shape of the second projection.

In the assembled configuration of the sealing device, the second projection of the anti-rotational pusher is inserted into the through opening of the circumferentially threaded ring in a mating configuration, so that said second projection projects through said opening to adhere to the base surface of the plug shank. In this assembled configuration, the pusher surface of the anti-rotational pusher adheres to the contact surface of the disk-shaped gasket, so as to push said gasket into its sealing position in the bore.

Preferably, the cross section of the second projection, i.e., a section which is orthogonal to the central rotation axis, is that of a two-dimensional closed geometric figure made of line segments. Preferably, at least one of the line segments is a straight-line segment.

Preferably, the through opening of the circumferentially threaded ring has a shape that is geometrically mating with the shape of the second projection of the anti-rotational pusher. More preferred, the through opening of the circumferentially threaded ring has a shape that is geometrically congruent with the shape of the second projection of the anti-rotational pusher.

Also preferably, the shank of the plug has the same overall diameter as the diameter of the threaded ring. Even more preferably, the thread of the shank has the same pitch as the thread of the ring.

Preferably, the base surface of the shank has a circular surface and has a diameter which is smaller than the overall diameter of said shank. Also preferably, the pusher surface of the anti-rotational pusher has the same overall diameter as the diameter of the disk-shaped gasket, whereas the overall diameter of said pusher surface and of said disk-shaped gasket is smaller than the overall diameters of the shank and of the threaded ring. The disk-shaped gasket may be provided with a substantially flat and solid seal surface and with a substantially flat and solid contact surface, whereas the pusher surface of the anti-rotational pusher may also be provided with at least one circumferential groove which is capable of reducing the contact area between said pusher surface and the contact surface of the disk-shaped gasket.

According to a preferred aspect of the present invention, the bolt-type plug may be provided with at least one through channel, which is oriented along the central rotation axis, for purging, venting and inspection purposes. Therefore, the anti-rotational pusher may be provided in turn with at least one through duct, which is aligned with a corresponding through channel of the bolt-type plug, for the same purging, venting and inspection purposes. Preferably, said through duct is internally threaded. More preferred, the through duct of the anti-rotational pusher has an internal diameter which is greater than the internal diameter of the through channel of the bolt-type plug and is internally threaded, so that the internal thread of said through duct makes it possible to at least partially insert a proper threaded extraction tool into said through duct for dismantling purposes.

The anti-rotational pusher, the threaded ring and the bolt-type plug may be preferably manufactured with the same material, so that said anti-rotational pusher, said threaded ring and said bolt-type plug have substantially the same hardness. The hardness of the disk-shaped gasket is instead lower than the hardness of the anti-rotational pusher, the threaded ring and the bolt-type plug. The bolt-type plug, the pusher assembly and the disk-shaped gasket are preferably made of metallic materials.

A method for assembling the sealing device described so far inside a bore obtained on a header portion of a heat exchanger is furthermore disclosed. The method comprises the steps of:

- providing a through hole in the header portion with multiple drilling operations, in order to obtain a bore comprising in sequence a first bore portion with a first predefined diameter, a second bore portion with a second predefined diameter and a third bore portion with a third predefined diameter. The bore should be made in such a way that:

  - the first predefined diameter is smaller than the second predefined diameter,
  - the second predefined diameter is smaller than the third predefined diameter, and
  - the axial length of the second bore portion is greater than the sum of the predefined thickness of the disk-shaped gasket and the first predefined thickness of the first projection of the anti-rotational pusher;

- providing an internal thread in at least the third bore portion;
- inserting the disk-shaped gasket into the second bore portion up to a first circumferential abutment wall of the bore, wherein the first circumferential abutment wall is located between the first bore portion and the second bore portion;
- inserting the second projection of the disk-shaped anti-rotational pusher into the through opening of the circumferentially threaded ring in a mating configuration, so as to form the pusher assembly in such a way that said second projection projects through said opening;
- inserting the pusher assembly into the bore by screwing the circumferentially threaded ring into the internal thread of the third bore portion, in such a way that the circumferentially threaded ring can no longer rotate by stopping against a second circumferential abutment wall of the bore, wherein said second circumferential abutment wall is located between the second bore portion and the third bore portion, and in such a way that the pusher surface of the anti-rotational pusher enters into the second bore portion to adhere to the contact surface of the gasket;
- inserting the bolt-type plug into the bore by screwing the shank of said bolt-type plug into the internal thread of the third bore portion, in such a way that the base surface of the shank faces the second projection of the disk-shaped anti-rotational pusher; and

- applying a tightening torque to the bolt-type plug, in such a way that the base surface of the shank adheres to the second projection of the disk-shaped anti-rotational pusher for pushing the gasket into its sealing position against the first circumferential abutment wall of the bore.

## Brief description of the drawings

The features and advantages of an improved sealing device for bores of a heat exchanger according to the present invention will be clearer from the following exemplifying and non-limiting description, with reference to the enclosed schematic drawings, in which:

Figure 1 is a side sectional view of a sealing device for bores of a heat exchanger according to the prior art, wherein the sealing device is of the single plug type;

Figure 2 is a side sectional view of another sealing device for bores of a heat exchanger according to the prior art, wherein the sealing device is of the double plug type;

Figure 3 is a side sectional view of a preferred embodiment of the sealing device for bores of a heat exchanger according to the present invention;

Figure 4 is an enlarged view of the detail indicated with reference "IV" in figure 3;

Figure 5 is a side view of the components of the sealing device of figure 3;

Figure 6 is a perspective view of the components of figure 5;

Figure 7 is another perspective view of the components of figure 5; and

Figure 8 shows the sequential assembly steps of the components of figure 5 inside a corresponding bore of a heat exchanger.

## Detailed description of the invention

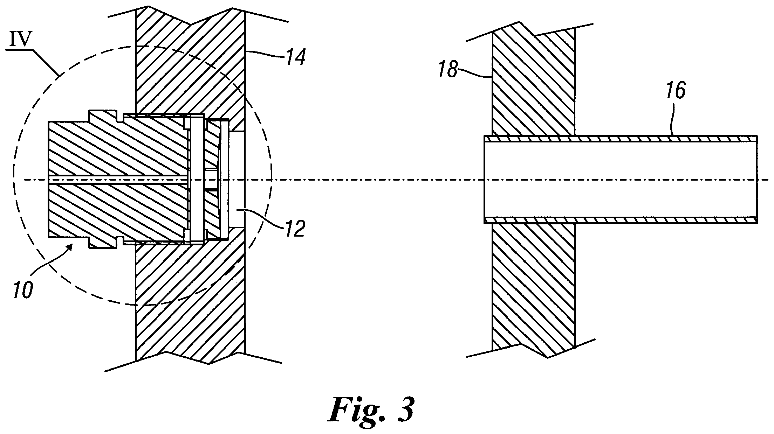

With reference to the figures, a preferred embodiment of an improved sealing device for bores of a heat exchanger according to the present invention is shown. The sealing device is indicated as a whole with reference numeral 10. The sealing device 10 is designed to seal a corresponding bore, in particular a bore obtained on the header of a heat exchanger. More specifically but not exclusively, the sealing device 10 is designed to seal a corresponding bore 12 obtained on the plug-sheet 14 of the box header of an air-cooled heat exchanger, that is, a bore 12 which is axially aligned with a tube 16 which, in turn, is integrally joined with the tube-sheet 18 of the box header, as shown in figure 3. It should be noted that, in order to properly receive the sealing device 10, the bore 12 should be specifically machined, as will be better explained hereinafter with reference to the assembly method of said sealing device 10.

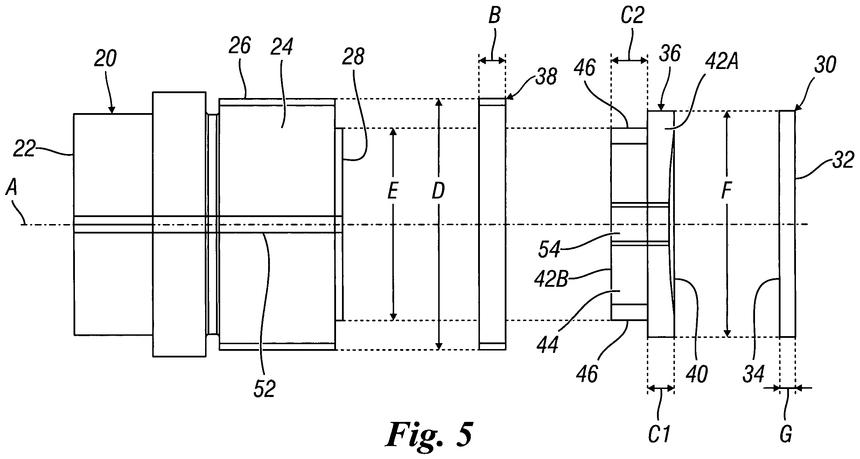

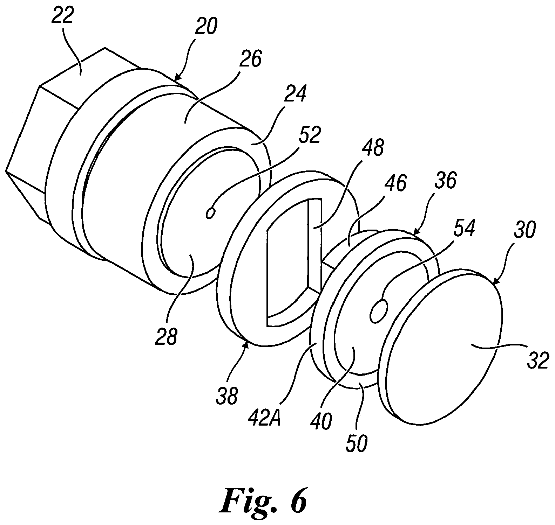

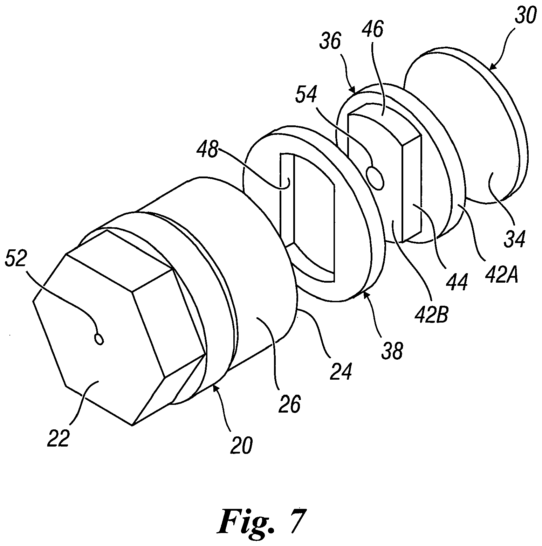

As shown in particular in figures 5 to 7, the sealing device 10 comprises at least one bolt-type plug 20, which is provided with a head 22 and with a substantially cylindrical shank 24. Preferably, the shank 24 is integrally formed in one piece with the head 22. The shank 24 has a threaded side surface 26, as well as a base surface 28 which is substantially perpendicular to a central rotation axis A of the plug 20. The plug 20 is thus designed to be inserted into a corresponding bore 12 in a threaded coupling.

The sealing device 10 also comprises at least one disk-shaped gasket 30 having a predefined thickness G. The disk-shaped gasket 30 is which is provided with a substantially flat, preferably solid, seal surface 32 and with a substantially flat, preferably solid, contact surface 34, which is opposite to said seal surface 32. The sealing device 10 further comprises at least one pusher assembly 36, 38, which is interposed between the bolt-type plug 20 and the disk-shaped gasket 30 along the central rotation axis A.

The pusher assembly 36, 38 comprises two separate interlocking elements. A first one of these interlocking elements is at least one disk-shaped anti-rotational pusher 36, which is provided with at least one first projection 42A, having a first predefined thickness C1 and comprising a pusher surface 40, and with at least one second projection 42B, opposite the pusher surface 40 and having a second predefined thickness C2. The second projection 42B may have the shape of any three-dimensional figure which is not axially symmetric around the central rotation axis A. Preferably, the cross section of the second projection 42B, i.e., a section which is orthogonal to the central rotation axis A, is that of a two-dimensional closed geometric shape made of line segments 44, 46, wherein at least one of these line segments 44, 46 is preferably a straight-line segment 44.

With the expression "two-dimensional closed geometric shape" it should be intended that the cross section of the second projection 42B is that of a closed geometrical figure made of line segments 44, 46, wherein at least one of these line segments is preferably a straight-line segment 44, whereas the other line segments 46 may also be curved segments. For example, as shown in the attached figures, the cross section of the second projection 42B is roughly that of a rectangle, wherein two opposite straight-line segments 44 are joined by two opposite curved-line segments 46.

Further possible designs of the second projection 42B are possible, that is, triangular, square, rectangular, hexagonal, etc. cross sections of the second projection 42B, but also cross sections with one or more curved-line segments. However, the presence of at least one straight-line segment 44 improves the anti-rotational capabilities of the pusher assembly, as will be better explained hereinafter.

The second interlocking element of the pusher assembly 36, 38 is at least one circumferentially threaded ring 38, having a predefined thickness B which is smaller than the second predefined thickness C2 of the second projection 42B of the anti-rotational pusher 36. The ring 38 is provided with at least one through opening 48 having a shape that is geometrically similar to the shape of said second projection 42B. More precisely, the through opening 48 should have a shape that is geometrically congruent with the shape of the second projection 42B of the anti-rotational pusher 3.

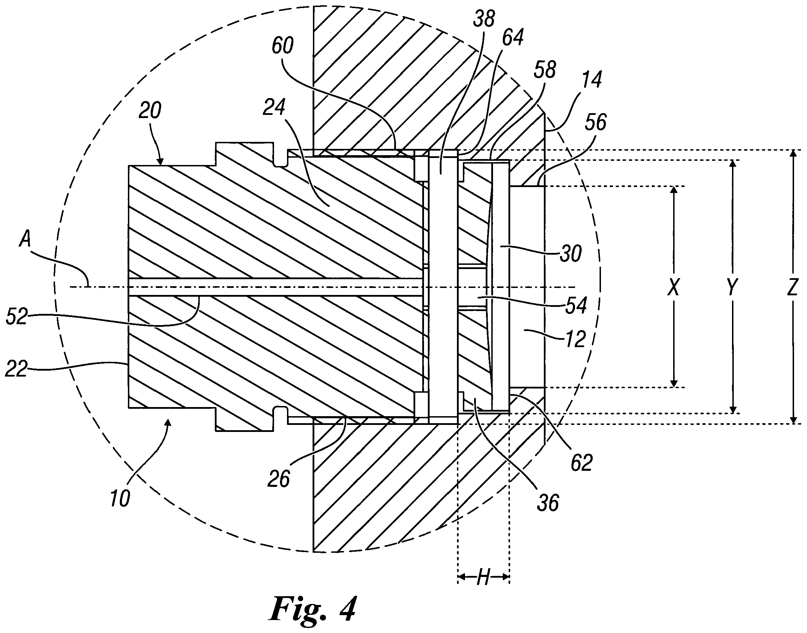

In the assembled configuration of the sealing device 10, as shown for example in figure 4, the second projection 42B of the anti-rotational pusher 36 is inserted into the through opening 48 of the ring 38 in a mating configuration, so that said second projection 42B projects through said opening 48 to adhere to the base surface 28 of the plug shank 24. Additionally, in this assembled configuration of the sealing device 10 the pusher surface 40 of the anti-rotational pusher 36 adheres to the contact surface 34 of the gasket 30, so as to push said gasket 30 into its sealing position in the bore 12.

In other words, thanks also to a particular shape of the bore 12, as will be better explained hereinafter with reference to the assembly method of the sealing device 10, when the plug 20 pushes against the pusher assembly 36, 38, by acting on the anti-rotational pusher 36, the mating shapes of the second projection 42B of said anti-rotational pusher 36 and the through opening 48 of the ring 38 prevent said anti-rotational pusher 36 from rotating, so that said anti-rotational pusher 36 may only move in the axial direction, that is, the direction of the central rotation axis A. This is due to the fact that the circumferentially threaded ring 38 is screwed and locked inside the bore 12 before the plug 20 is fully tightened inside said bore 12. Since the anti-rotational pusher 36 does not rotate anymore inside the bore 12 when the pusher surface 40 comes into contact with the contact surface 34 of the gasket 30, there is no twisting of said gasket 30 and thus no frictional and/or torsional stress on said gasket 30 when the plug 20 is tightened.

Preferably, as shown in the attached figures, the shank 24 of the plug 20 has the same overall diameter D as the diameter of the threaded ring 38. In other words, the thread 26 of the shank 24 has the same overall diameter D of the thread of the ring 38. Advantageously, the thread 26 of the shank 24 may also have the same pitch as the thread of the ring 38. These features allow to easily machine the bore 12 for an equally easy insertion of the sealing device 10 into said bore 12.

Preferably, the base surface 28 of the shank 24 has a circular surface and has a diameter E which is smaller than the overall diameter D of said shank 24. This feature allows to reduce the thrust and rotation surface of the plug 20 acting on the pusher assembly 36, 38, while maintaining the sealing capacity of the whole sealing device 10. For the same reason as above, the pusher surface 40 of the anti-rotational pusher 36 may also be provided with at least one circumferential groove 50 which is capable of reducing the contact area between said pusher surface 40 and the contact surface 34 of the disk-shaped gasket 30.

The pusher surface 40 of the anti-rotational pusher 36 preferably has the same overall diameter F as the diameter of the disk-shaped gasket 30. Advantageously, as will be better explained hereinafter with reference to the assembly method of the sealing device 10, the overall diameter F of said pusher surface 40 and of said disk-shaped gasket 30 is smaller than the overall diameter D of the shank 24 and of the threaded ring 38. The pusher surface 40 of the anti-rotational pusher 36 can be a flat surface or, alternatively, a convex surface.

Preferably, the anti-rotational pusher 36, the threaded ring 38 and the bolt-type plug 20 are manufactured with the same material, so that said anti-rotational pusher 36, said threaded ring 38 and said bolt-type plug 20 have substantially the same hardness. The hardness of the disk-shaped gasket 30 is instead lower than the hardness of the anti-rotational pusher 36, the threaded ring 38 and the bolt-type plug 20. Regardless of hardness, all the components of the sealing device 10, that is, the bolt-type plug 20, the pusher assembly 36, 38 and the disk-shaped gasket 30 are preferably made of metallic materials.

The bolt-type plug 20 may be provided with at least one through channel 52, which is oriented along the central rotation axis A and which has purging, venting and inspection purposes. Consequently, the anti-rotational pusher 36 may be provided with at least one through duct 54, which is aligned with a corresponding through channel 52 of the bolt-type plug 20 and which has the same purposes of said through channel 52. Additionally, the through duct 54 may be internally threaded, so as to make it possible to at least partially insert a proper threaded extraction tool into said through duct 54, so that the anti-rotational pusher 36 and thus the disk-shaped gasket 30 may be easily dismantled from the bore 12 if necessary. For this additional purpose, this through duct 54 preferably has an internal diameter which is greater than the internal diameter of the through channel 52 of the bolt-type plug 20.

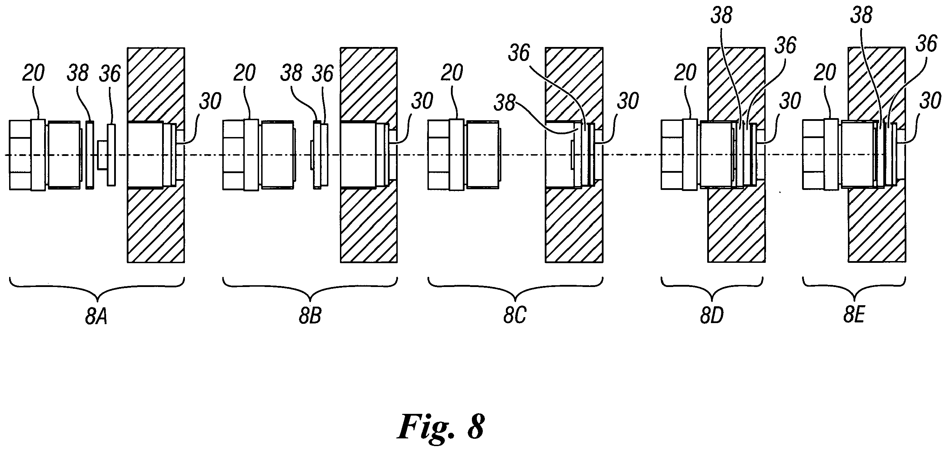

With specific reference to figures 4 and 8, the method for assembling the sealing device 10 described so far inside a bore 12 obtained on a header of a heat exchanger is as follows. This assembling method initially requires a specific step of forming a proper bore 12, that is, a bore 12 with multiple internal diameters and with specific abutment walls designed to allow proper operation of the sealing device 10.

More specifically, the assembling method comprises a preliminary step of providing a through hole in the plug-sheet 14 of the box header with multiple drilling operations. These multiple drilling operations, carried out one after the other, allow to obtain a bore 12 comprising in sequence a first bore portion 56 with a first predefined diameter X, a second bore portion 58 with a second predefined diameter Y and a third bore portion 60 with a third predefined diameter Z. These bore portions 56, 58, 60 are visible in figure 4. The first predefined diameter X of the first bore portion 56 is smaller than the second predefined diameter Y of the second bore portion 58, whereas said second predefined diameter Y is smaller than the third predefined diameter Z of the third bore portion 60. In other words, with reference in particular to Figure 4:

$$X < Y < Z,$$

in such a way that the first bore portion 56, which opens towards the tube-sheet 18 of the box header and is thus axially aligned with a corresponding tube 16, is narrower than the second bore portion 58. Additionally, the third bore portion 60, which opens from the opposite side of the plug-sheet 14 with respect to the first bore portion 56, is wider than the second bore portion 58, which is located between the first bore portion 56 and the third bore portion 60.

Furthermore, the bore 12 is designed in such a way that the axial length H of the second bore portion 58 is greater than the sum of the predefined thickness G of said disk-shaped gasket 30 and the first predefined thickness C1 of the first projection 42A of the anti-rotational pusher 36. In other words, with reference in particular to Figures 4 and 5:

$$H > G + C.$$

These dimensional features allow the pusher assembly 36, 38 to correctly perform its anti-rotational capabilities.

Subsequently, at least the third bore portion 60 must be internally threaded, so as to allow the screwing of the threaded components of the sealing device 10, that is, the plug 20 and the circumferentially threaded ring 38, into the bore 12. The sequential assembly steps of the components of the sealing device 10 into the bore 12 are shown in figure 8.

The first assembly step (step 8A, figure 8) comprises the insertion of the disk-shaped gasket 30 into the bore 12, more specifically into the second bore portion 58, up to a first circumferential abutment wall 62 obtained in the bore 12. This first circumferential abutment wall 62 is located between the first bore portion 56 and said second bore portion 58 of the bore 12. The bore 12 is thus machined in such a way that the diameter F of the disk-shaped gasket 30 is greater than the first predefined diameter X of the first bore portion 56, whereas said diameter F of the disk-shaped gasket 30 is substantially equal (except for obvious construction tolerances) to the second predefined diameter Y of the second bore portion 58. In other words, with reference in particular to Figures 4 and 5:

$$F > X; F = Y.$$

Therefore, since the disk-shaped gasket 30 is a solid gasket, that is, it has no through hole, in the sealing device 10 according to the present invention there is one single possible path for the leakage of the fluids contained in the header of the heat exchanger. This single possible leakage path can only occur through the annular-shaped contact area between the disk-shaped gasket 30 and the first circumferential abutment wall 62. The difference between the diameter F of the disk-shaped gasket 30 and the first predefined diameter X of the first bore portion 56 therefore determines the overall surface of this leakage path.

The second assembly step (step 8B, figure 8) comprises the insertion, preferably outside the bore 12, of the second projection 42B of the disk-shaped anti-rotational pusher 36 into the through opening 48 of the circumferentially threaded ring 38 in a mating configuration. The pusher assembly 36, 38 is thus formed, in such a way that the second projection 42B of the disk-shaped anti-rotational pusher 36 projects through the through opening 48 of the circumferentially threaded ring 38, since the second predefined thickness C2 of said second projection 42B is greater than the predefined thickness B of said ring 38.

The third assembly step (step 8C, figure 8) comprises the insertion of the pusher assembly 36, 38 into the bore 12 by screwing, with a proper tool, the circumferentially threaded ring 38 into the internal thread of the third bore portion 60. This circumferentially threaded ring 38 is screwed up to a second circumferential abutment wall 64 of the bore 12, located between the second bore portion 58 and the third bore portion 60. In this way, this circumferentially threaded ring 38 can no longer rotate inside the bore 12, since it stops against the second circumferential abutment wall 64. However, due to the specific dimensions of the bore 12 described above, the pusher surface 40 of the anti-rotational pusher 36 always enter into the second bore portion 58 to adhere to the contact surface 34 of the gasket 30.

The fourth assembly step (step 8D, figure 8) comprises the insertion of the bolt-type plug 20 into the bore 12 by screwing the shank 24 of said bolt-type plug 20 into the internal thread of the third bore portion 60, in such a way that the base surface 28 of the shank 24 faces the second projection 42B of the disk-shaped anti-rotational pusher 36. At this point, a predefined tightening torque to the bolt-type plug 20 can be applied to perform the fifth and final assembly step (step 8E, figure 8) of the method for assembling the sealing device 10. In this way, the base surface 28 of the shank 24 adheres to the second projection 42B of the disk-shaped anti-rotational pusher 36. Simultaneously, the pusher surface 40 of the anti-rotational pusher 36, due to the fact that said anti-rotational pusher 36 cannot rotate, simply pushes (but does not twist) the gasket 30 into its sealing position against the first circumferential abutment wall 62 of the bore 12.

It is thus seen that the improved sealing device for bores of a heat exchanger according to the present invention achieve the previously outlined objects, reducing the leakages of said sealing device with respect to prior art devices by modifying the design of the gasket (from ring-shape to solid disk-shape) and of the pusher assembly. In this way, the leakage can occur only through one path instead of two (length of leakage path is halved with respect to prior art devices). Additionally, the construction tolerance on the sealing device components became less important than in prior art devices, so that these components can be relaxed for longer life.

Finally, the adoption of an internal anti-rotational pusher assembly ensures that the gasket won't be subjected to shear stress due to friction during tightening of the plug, which would lead to gasket disruption (for a single plug configuration such that of figure 1 this is an evidence, whereas for a double plug configuration such that of figure 2 this is a probability depending on several parameters). The following comparison table shows all the differences, and the consequent advantages, between the improved sealing device according to the present invention and the prior art devices.

| single plug configuration | double plug configuration | improved sealing device 10 |
|---|---|---|
| double path for leakage | double path for leakage | one single path for leakage |
| gasket (annular) width can be optimal | gasket (annular) width shall be reduced to contain plug dimension | gasket (solid) diameter can always be optimal |
| no thread protection, since threads are directly in contact with working fluid: corrosion and relaxation of tightening load can occur | threads are isolated from working fluid | threads are isolated from working fluid |
| no gasket protection, since gasket can be damaged during tightening due to frictional stress | no gasket protection, since gasket can be damaged during tightening due to frictional stress | gasket is subject only to compressive stress: no friction stress on the gasket surface |

The improved sealing device for bores of a heat exchanger of the present invention thus conceived is susceptible in any case of numerous modifications and variants, all falling within the same inventive concept; in addition, all the details can be substituted by technically equivalent elements. In practice, the materials used, as well as the shapes and size, can be of any type according to the technical requirements.

The scope of protection of the invention is therefore defined by the enclosed claims.

**List of references**

10: sealing device;
12: bore;
14: plug-sheet of the box header;
16: tube;
18: tube-sheet of the box header;
20: bolt-type plug;
22: plug head;
24: plug shank;
26: shank threaded side surface;
28: shank base surface;
30: disk-shaped gasket;
32: gasket seal surface;
34: gasket contact surface;
36: anti-rotational pusher;

38: circumferentially threaded ring;

40: pusher surface;

42A: pusher first projection;

42B: pusher second projection;

44: second projection straight-line segments;

46: second projection curved-line segments;

48: ring through opening;

50: pusher surface circumferential groove;

52: plug through channel;

54: pusher through duct;

56: first bore portion;

58: second bore portion;

60: third bore portion;

62: first circumferential abutment wall;

64: second circumferential abutment wall;

A: plug central rotation axis;

B: ring thickness;

C1: pusher first projection thickness;

C2: pusher second projection thickness;

D: shank and ring diameter;

E: base surface diameter;

F: pusher surface and gasket diameter;

G: gasket thickness;

H: axial length of second bore portion;

X: diameter of first bore portion;

Y: diameter of second bore portion;

Z: diameter of third bore portion.

## Claims

1. A sealing device (10) for bores, in particular bores (12) obtained on a header portion (14) of a heat exchanger, the sealing device (10) comprising:

- at least one bolt-type plug (20), which is provided with a head (22) and with a substantially cylindrical shank (24), wherein said shank (24) has a threaded side surface (26) and a base surface (28) which is substantially perpendicular to a central rotation axis (A) of said plug (20), and wherein said plug (20) is designed to be inserted into a corresponding bore (12) in a threaded coupling;
- at least one disk-shaped gasket (30) having a predefined thickness (G), wherein said disk-shaped gasket (30) is provided with a substantially flat seal surface (32) and with a substantially flat contact surface (34), which is opposite to said seal surface (32); and
- at least one pusher assembly (36, 38), which is interposed between said bolt-type plug (20) and said disk-shaped gasket (30) along said central rotation axis (A),

the sealing device (10) being **characterized in that** said pusher assembly (36, 38) comprises:

- at least one disk-shaped anti-rotational pusher (36), which is provided with at least one first projection (42A), having a first predefined thickness (C1) and comprising a pusher surface (40), and with at least one second projection (42B), opposite said pusher surface (40) and having a second predefined thickness (C2), wherein said second projection (42B) has the shape of any three-dimensional figure which is not axially symmetric around said central rotation axis (A); and
- at least one circumferentially threaded ring (38), having a predefined thickness (B) which is smaller than the second predefined thickness (C2) of said second projection (42B), wherein said ring (38) is provided with at least one through opening (48) having a shape that is geometrically similar to the shape of said second projection (42B),

wherein, in the assembled configuration of the sealing device (10), said second projection (42B) is inserted into said through opening (48) in a mating configuration, so that said second projection (42B) projects through said opening (48) to adhere to said base surface (28), whereas said pusher surface (40) adheres to the contact surface (34) of said gasket (30), so as to push said gasket (30) into its sealing position in said bore (12).

2. The sealing device (10) according to claim 1, **characterized in that** the cross section of said second projection (42B), i.e., a section which is orthogonal to said central rotation axis (A), is that of a two-dimensional closed geometric figure made of line segments (44, 46), preferably wherein at least one of said line segments (44, 46) is a straight-line segment (44).

3. The sealing device (10) according to claim 1 or 2, **characterized in that** the shank (24) of said plug (20) has the same overall diameter (D) as the diameter of said threaded ring (38).

4. The sealing device (10) according to claim 3, **characterized in that** the thread (26) of said shank (24) has the same pitch as the thread of said ring (38).

5. The sealing device (10) according to anyone of claims 1 to 4, **characterized in that** the base surface (28) of said shank (24) has a circular surface and has a diameter (E) which is smaller than the overall diameter (D) of said shank (24).

6. The sealing device (10) according to anyone of claims 1 to 5, **characterized in that** the pusher surface (40) of said anti-rotational pusher (36) has the same overall diameter (F) as the diameter of said disk-shaped gasket (30), wherein the overall diameter (F) of said pusher surface (40) and of said disk-shaped gasket (30) is smaller than the overall diameter (D) of said shank (24) and of said threaded ring (38).

7. The sealing device (10) according to anyone of claims 1 to 6, **characterized in that** said disk-shaped gasket (30) is provided with a substantially flat and solid seal surface (32) and with a substantially flat and solid contact surface (34), whereas the pusher surface (40) of said anti-rotational pusher (36) is provided with at least one circumferential groove (50) which is capable of reducing the contact area between said pusher surface (40) and the contact surface (34) of said disk-shaped gasket (30).

8. The sealing device (10) according to anyone of claims 1 to 7, **characterized in that** said bolt-type plug (20) is provided with at least one through channel (52), which is oriented along said central rotation axis (A), for purging, venting and inspection purposes.

9. The sealing device (10) according to claim 8, **characterized in that** said anti-rotational pusher (36) is provided with at least one through duct (54), which is aligned with a corresponding through channel (52) of said bolt-type plug (20), for purging, venting and inspection purposes, preferably wherein said through duct (54) is internally threaded.

10. The sealing device (10) according to claim 9, **characterized in that** said through duct (54) has an internal diameter which is greater than the internal diameter of said through channel (52) and is internally threaded, so that the internal thread of said through duct (54) makes it possible to at least partially insert a proper threaded extraction tool into said through duct (54) for dismantling purposes.

11. The sealing device (10) according to anyone of claims 1 to 10, **characterized in that** said anti-rotational pusher (36), said threaded ring (38) and said bolt-type plug (20) are manufactured with the same material, so that said anti-rotational pusher (36), said threaded ring (38) and said bolt-type plug (20) have substantially the same hardness.

12. The sealing device (10) according to anyone of claims 1 to 11, **characterized in that** the hardness of said disk-shaped gasket (30) is lower than the hardness of said anti-rotational pusher (36), said threaded ring (38) and said bolt-type plug (20).

13. The sealing device (10) according to anyone of claims 1 to 12, **characterized in that** said bolt-type plug (20), said pusher assembly (36, 38) and said disk-shaped gasket (30) are made of metallic materials.

14. A method for assembling the sealing device (10) according to anyone of the preceding claims inside a bore (12) obtained on a header portion (14) of a heat exchanger, the method comprising the steps of:

- providing a through hole in said header portion (14) with multiple drilling operations, in order to obtain a bore (12) comprising in sequence a first bore portion (56) with a first predefined diameter (X), a second bore portion (58) with a second predefined diameter (Y) and a third bore portion (60) with a third predefined diameter (Z), wherein said first predefined diameter (X) is smaller than said second predefined diameter (Y), wherein said second predefined diameter (Y) is smaller than said third predefined diameter (Z) and wherein the axial length (H) of said second bore portion (58) is greater than the sum of the predefined thickness (G) of said disk-shaped gasket (30) and the first predefined thickness (C1) of the first projection (42A) of said anti-rotational pusher (36);
- providing an internal thread in at least said third bore portion (60);
- inserting said disk-shaped gasket (30) into said second bore portion (58) up to a first circumferential abutment wall (62) of said bore (12), wherein said first circumferential abutment wall (62) is located between said first bore portion (56) and said second bore portion (58);
- inserting the second projection (42B) of said disk-shaped anti-rotational pusher (36) into the through opening (48) of said circumferentially threaded ring (38) in a mating configuration, so as to form said pusher assembly (36, 38) in such a way that said second projection (42B) projects through said opening (48);
- inserting said pusher assembly (36, 38) into said bore (12) by screwing said circumferentially threaded ring (38) into the internal thread of said third bore portion (60), in such a way that said circumferentially threaded ring (38) can no longer rotate by stopping against a second circumferential abutment wall (64) of said bore (12), wherein said second circumferential abutment wall (64) is located between said second bore portion (58) and said third bore portion (60), and in such a way that said pusher surface (40) enters into said second bore portion (58) to adhere to the contact surface (34) of said gasket (30);
- inserting said bolt-type plug (20) into said bore (12) by screwing the shank (24) of said bolt-type plug (20) into the internal thread of said third bore portion (60), in such a way that the base surface (28) of said shank (24) faces said second projection (42B); and
- applying a tightening torque to said bolt-type plug (20), in such a way that the base surface (28) of said shank (24) adheres to said second projection (42B) for pushing said gasket (30) into its sealing position against said first circumferential abutment wall (62) of said bore (12).

**Patentansprüche**

1. Dichtungsvorrichtung (10) für Bohrungen, insbesondere Bohrungen (12), die an einem Sammelrohrabschnitt (14) eines Wärmetauschers erhalten sind, wobei die Dichtungsvorrichtung (10) Folgendes umfasst:

- mindestens einen bolzenartigen Stopfen (20), der mit einem Kopf (22) und mit einem im Wesentlichen zylindrischen Schaft (24) versehen ist, wobei der Schaft (24) eine mit Gewinde versehene Seitenfläche (26) und eine Basisfläche (28), die im Wesentlichen senkrecht zu einer mittigen Rotationsachse (A) des Stopfens (20) ist, aufweist, und wobei der Stopfen (20) dafür gestaltet ist, in eine entsprechende Bohrung (12) in einer Gewindekupplung eingesetzt zu werden;
- mindestens eine scheibenförmige Dichtung (30), die eine vordefinierte Dicke (G) aufweist, wobei die scheibenförmige Dichtung (30) mit einer in Wesentlichen flachen Dichtungsfläche (32) und mit einer im Wesentlichen flachen Kontaktfläche (34), die entgegengesetzt zu der Dichtungsfläche (32) ist, versehen ist; und
- mindestens eine Drückerbaugruppe (36, 38), die zwischen dem bolzenartigen Stopfen (20) und der scheibenförmigen Dichtung (30) entlang der mittigen Rotationsachse (A) eingefügt ist,
wobei die Dichtungsvorrichtung (10) **dadurch gekennzeichnet ist, dass** die Drückerbaugruppe (36, 38) Folgendes umfasst:

- mindestens einen scheibenförmigen rotationssicheren Drücker (36), der mit mindestens einem ersten Vorsprung (42A), der eine erste vordefinierte Dicke (C1) aufweist und eine Drückerfläche (40) umfasst, und mit mindestens einem zweiten Vorsprung (42B), der gegenüber der Drückerfläche (40) liegt und eine zweite vordefinierte Dicke (C2) aufweist, versehen ist, wobei der zweite Vorsprung (42B) die Form einer beliebigen dreidimensionalen Figur aufweist, die nicht um die mittige Rotationsachse (A) axialsymmetrisch ist, und
- mindestens einen umlaufend mit Gewinde versehenen Ring (38), der eine vordefinierte Dicke (B) aufweist, die kleiner ist als die zweite vordefinierte Dicke (C2) des zweiten Vorsprungs (42B), wobei der Ring (38) mit mindestens einer Durchgangsöffnung (48) versehen ist, die eine Form aufweist, die der Form des zweiten Vorsprungs (42B) geometrisch ähnlich ist,

wobei, in der zusammengesetzten Konfiguration der Dichtungsvorrichtung (10), der zweite Vorsprung (42B) in einer passenden Konfiguration in die Durchgangsöffnung (48) eingesetzt ist, sodass der zweite Vorsprung (42B) durch die Öffnung (48) vorspringt, um an der Basisfläche (28) zu haften, wohingegen die Drückerfläche (40) an der Kontaktfläche (34) der Dichtung (30) haftet, um so die Dichtung (30) in ihre Abdichtungsposition in der Bohrung (12) zu drücken.

2. Dichtungsvorrichtung (10) nach Anspruch 1, **dadurch gekennzeichnet, dass** der Querschnitt des zweiten Vorsprungs (42B), d. h., ein Schnitt, der senkrecht zu der mittigen Rotationsachse (A) ist, derjenige einer zweidimensionalen geschlossenen geometrischen Figur ist, die aus Strecken (44, 46) besteht, vorzugsweise wobei mindestens eine der Strecken (44, 46) eine gerade Strecke (44) ist.

3. Dichtungsvorrichtung (10) nach Anspruch 1 oder 2, **dadurch gekennzeichnet, dass** der Schaft (24) des Stopfens (20) den gleichen Gesamtdurchmesser (D) wie der Durchmesser des mit Gewinde versehenen Rings (38) aufweist.

4. Dichtungsvorrichtung (10) nach Anspruch 3, **dadurch gekennzeichnet, dass** das Gewinde (26) des Schafts (24) die gleiche Steigung wie das Gewinde des Rings (38) aufweist.

5. Dichtungsvorrichtung (10) nach einem der Ansprüche 1 bis 4, **dadurch gekennzeichnet, dass** die Basisfläche (28) des Schafts (24) eine kreisförmige Fläche aufweist und einen Durchmesser (E) aufweist, der kleiner ist als der Gesamtdurchmesser (D) des Schafts (24).

6. Dichtungsvorrichtung (10) nach einem der Ansprüche 1 bis 5, **dadurch gekennzeichnet, dass** die Drückerfläche (40) des rotationssicheren Drückers (36) den gleichen Gesamtdurchmesser (F) wie der Durchmesser der scheibenförmigen Dichtung (30) aufweist, wobei der Gesamtdurchmesser (F) der Drückerfläche (40) und der scheibenförmigen Dichtung (30) kleiner ist als der Gesamtdurchmesser (D) des Schafts (24) und des mit Gewinde versehenen Rings (38).

7. Dichtungsvorrichtung (10) nach einem der Ansprüche 1 bis 6, **dadurch gekennzeichnet, dass** die scheibenförmige Dichtung (30) mit einer im Wesentlichen flachen und massiven Dichtungsfläche (32) und mit einer im Wesentlichen flachen und massiven Kontaktfläche (34) versehen ist, wohingegen die Drückerfläche (40) des rotationssicheren Drückers (36) mit mindestens einer umlaufenden Rille (50) versehen ist, die dazu in der Lage ist, den Kontaktbereich zwischen der Drückerfläche (40) und der Kontaktfläche (34) der scheibenförmigen Dichtung (30) zu verringern.

8. Dichtungsvorrichtung (10) nach einem der Ansprüche 1 bis 7, **dadurch gekennzeichnet, dass** der bolzenartige Stopfen (20) zu Spülungs-, Lüftungs- und Inspektionszwecken mit mindestens einem Durchgangskanal (52), der entlang der mittigen Rotationsachse (A) ausgerichtet ist, versehen ist.

9. Dichtungsvorrichtung (10) nach Anspruch 8, **dadurch gekennzeichnet, dass** der rotationssichere Drücker (36) zu Spülungs-, Lüftungs- und Inspektionszwecken mit mindestens einer Durchgangsleitung (54), die mit einem entsprechenden Durchgangskanal (52) des bolzenartigen Stopfens (20) ausgerichtet ist, versehen ist, vorzugsweise wobei die Durchgangsleitung (54) mit Innengewinde versehen ist.

10. Dichtungsvorrichtung (10) nach Anspruch 9, **dadurch gekennzeichnet, dass** die Durchgangsleitung (54) einen Innendurchmesser aufweist, der größer ist als der Innendurchmesser des Durchgangskanals (52), und mit Innengewinde versehen ist, sodass es das Innengewinde der Durchgangsleitung (54) möglich macht, ein mit passendem Gewinde versehenes Extraktionswerkzeug zu Demontagezwecken mindestens teilweise in die Durchgangsleitung (54) einzuführen.

11. Dichtungsvorrichtung (10) nach einem der Ansprüche 1 bis 10, **dadurch gekennzeichnet, dass** der rotationssichere Drücker (36), der mit Gewinde versehene Ring (38) und der bolzenartige Stopfen (20) mit dem gleichen Material gefertigt sind, sodass der rotationssichere Drücker (36), der mit Gewinde versehene Ring (38) und der bolzenartige Stopfen (20) im Wesentlichen die gleiche Härte aufweisen.

12. Dichtungsvorrichtung (10) nach einem der Ansprüche 1 bis 11, **dadurch gekennzeichnet, dass** die Härte der scheibenförmigen Dichtung (30) niedriger ist als die Härte des rotationssicheren Drückers (36), des mit Gewinde versehenen Rings (38) und des bolzenartigen Stopfens (20).

13. Dichtungsvorrichtung (10) nach einem der Ansprüche 1 bis 12, **dadurch gekennzeichnet, dass** der bolzenartige Stopfen (20), die Drückerbaugruppe (36, 38) und die scheibenförmige Dichtung (30) aus metallischen Materialien bestehen.

14. Verfahren zum Zusammensetzen der Dichtungsvorrichtung (10) nach einem der vorhergehenden Ansprüche innerhalb einer Bohrung (12), die an einem Sammelrohrabschnitt (14) eines Wärmetauschers erhalten ist, wobei das Verfahren die folgenden Schritte umfasst:

- Bereitstellen eines Durchgangslochs in dem Sammelrohrabschnitt (14) mit mehreren Bohroperationen, um eine Bohrung (12) zu erhalten, die nacheinander einen ersten Bohrungsabschnitt (56) mit einem ersten vordefinierten Durchmesser (X), einen zweiten Bohrungsabschnitt (58) mit einem zweiten vordefinierten Durchmesser (Y) und einen dritten Bohrungsabschnitt (60) mit einem dritten vordefinierten Durchmesser (Z) umfasst, wobei der erste vordefinierte Durchmesser (X) kleiner ist als der zweite vordefinierte Durchmesser (Y), wobei der zweite vordefinierte Durchmesser (Y) kleiner ist als der dritte vordefinierte Durchmesser (Z) und wobei die axiale Länge (H) des zweiten Bohrungsabschnitts (58) größer ist als die Summe der vordefinierten Dicke (G) der scheibenförmigen Dichtung (30) und der ersten vordefinierten Dicke (C1) des ersten Vorsprungs (42A) des rotationssicheren Drückers (36);
- Bereitstellen eines Innengewindes in mindestens dem dritten Bohrungsabschnitt (60);
- Einsetzen der scheibenförmigen Dichtung (30) in den zweiten Bohrungsabschnitt (58) bis zu einer ersten umlaufenden Widerlagerwand (62) der Bohrung (12), wobei sich die erste umlaufende Widerlagerwand (62) zwischen dem ersten Bohrungsabschnitt (56) und dem zweiten Bohrungsabschnitt (58) befindet,
- Einsetzen des zweiten Vorsprungs (42B) des scheibenförmigen rotationssicheren Drückers (36) in die Durchgangsöffnung (48) des umlaufend mit Gewinde versehenen Rings (38) in einer passenden Konfiguration, um so die Drückerbaugruppe (36, 38) auf eine solche Weise zu bilden, dass der zweite Vorsprung (42B) durch die Öffnung (48) vorspringt;
- Einsetzen der Drückerbaugruppe (36, 38) in die Bohrung (12) durch Schrauben des umlaufend mit Gewinde versehenen Rings (38) in das Innengewinde des dritten Bohrungsabschnitts (60), auf eine solche Weise, dass sich der umlaufend mit Gewinde versehene Ring (38) durch Anhalten an einer zweiten umlaufenden Widerlagerwand (64) der Bohrung (12) nicht mehr drehen kann, wobei sich die zweite umlaufende Widerlagerwand (64) zwischen dem zweiten Bohrungsabschnitt (58) und dem dritten Bohrungsabschnitt (60) befindet, und auf eine solche Weise, dass die Drückerfläche (40) in den zweiten Bohrungsabschnitt (58) eintritt, um an der Kontaktfläche (34) der Dichtung (30) zu haften,
- Einsetzen des bolzenartigen Stopfens (20) in die Bohrung (12) durch Schrauben des Schafts (24) des bolzenartigen Stopfens (20) in das Innengewinde des dritten Bohrungsabschnitts (60), auf eine solche Weise, dass die Basisfläche (28) des Schafts (24) dem zweiten Vorsprung (42B) zugewandt ist; und
- Anwenden eines Anzugsdrehmoments auf den bolzenartigen Stopfen (20), auf eine solche Weise, dass die Basisfläche (28) des Schafts (24) an dem zweiten Vorsprung (42B) haftet, um die Dichtung (30) in ihre Abdichtungsposition an der ersten umlaufenden Widerlagerwand (62) der Bohrung (12) zu drücken.

**Revendications**

1. Dispositif d'étanchéité (10) pour alésages, en particulier des alésages (12) obtenus sur une partie de collecteur (14) d'un échangeur de chaleur, le dispositif d'étanchéité (10) comprenant :

- au moins un bouchon de type à boulon (20), qui est doté d'une tête (22) et d'une tige sensiblement cylindrique (24), dans lequel ladite tige (24) présente une surface latérale filetée (26) et une surface de base (28) qui est sensiblement perpendiculaire à un axe de rotation central (A) dudit bouchon (20), et dans lequel ledit bouchon (20) est conçu pour être inséré dans un alésage correspondant (12) par un accouplement fileté ;
- au moins un joint en forme de disque (30) présentant une épaisseur prédéfinie (G), dans lequel ledit joint en forme de disque (30) est doté d'une surface d'étanchéité sensiblement plane (32) et d'une surface de contact sensiblement plane (34), qui est opposée à ladite surface d'étanchéité (32) ; et
- au moins un ensemble de poussoir (36, 38) qui est intercalé entre ledit bouchon de type à boulon (20) et ledit joint en forme de disque (30) le long dudit axe de rotation central (A),

le dispositif d'étanchéité (10) étant **caractérisé en ce que** ledit ensemble de poussoir (36, 38) comprend :

- au moins un poussoir anti-rotation en forme de disque (36), qui est doté d'au moins une première saillie (42A), présentant une première épaisseur prédéfinie (C1) et comprenant une surface de poussoir (40), et d'au moins une seconde saillie (42B), opposée à ladite surface de poussoir (40) et présentant une seconde épaisseur prédéfinie (C2), dans lequel ladite seconde saillie (42B) présente la forme d'une quelconque figure en trois dimensions qui n'est pas axialement symétrique autour dudit axe de rotation central (A) ; et
- au moins un anneau fileté de manière circonférentielle (38), présentant une épaisseur prédéfinie (B) qui est inférieure à la seconde épaisseur prédéfinie (C2) de ladite seconde saillie (42B), dans lequel ledit anneau (38) est doté d'au moins une ouverture passante (48) présentant une forme qui est géométriquement similaire à la forme de ladite seconde saillie (42B),

dans lequel, dans la configuration assemblée du dispositif d'étanchéité (10), ladite seconde saillie (42B) est insérée dans ladite ouverture passante (48) dans une configuration d'accouplement, de sorte que ladite seconde saillie (42B) se projette à travers ladite ouverture (48) pour adhérer à ladite surface de base (28), tandis que ladite surface de poussoir (40) adhère à la surface de contact (34) dudit joint (30), de façon à pousser ledit joint (30) dans sa position d'étanchéité dans ledit alésage (12).

2. Dispositif d'étanchéité (10) selon la revendication 1, **caractérisé en ce que** la coupe transversale de ladite seconde saillie (42B), à savoir une coupe perpendiculaire audit axe de rotation central (A), est celle d'une figure géométrique fermée en deux dimensions constituée de segments (44, 46), de préférence dans lequel au moins un desdits segments (44, 46) est un segment de droite (44).

3. Dispositif d'étanchéité (10) selon la revendication 1 ou 2, **caractérisé en ce que** la tige (24) dudit bouchon (20) présente le même diamètre total (D) que le diamètre dudit anneau fileté (38).

4. Dispositif d'étanchéité (10) selon la revendication 3, **caractérisé en ce que** le filet (26) de ladite tige (24) présente le même pas que le filet dudit anneau (38).

5. Dispositif d'étanchéité (10) selon l'une quelconque des revendications 1 à 4, **caractérisé en ce que** la surface de base (28) de ladite tige (24) présente une surface circulaire et présente un diamètre (E) qui est inférieur au diamètre total (D) de ladite tige (24).

6. Dispositif d'étanchéité (10) selon l'une quelconque des revendications 1 à 5, **caractérisé en ce que** la surface de poussoir (40) dudit poussoir anti-rotation (36) présente le même diamètre total (F) que le diamètre dudit joint en forme de disque (30), dans lequel le diamètre total (F) de ladite surface de poussoir (40) et dudit joint en forme de disque (30) est inférieur au diamètre total (D) de ladite tige (24) et dudit anneau fileté (38).

7. Dispositif d'étanchéité (10) selon l'une quelconque des revendications 1 à 6, **caractérisé en ce que** ledit joint en forme de disque (30) est doté d'une surface de joint sensiblement plane et solide (32) et d'une surface de contact sensiblement plane et solide (34), tandis que la surface de poussoir (40) dudit poussoir anti-rotation (36) est dotée d'au moins une rainure circonférentielle (50) capable de réduire la zone de contact entre ladite surface de poussoir (40) et la surface de contact (34) dudit joint en forme de disque (30).

8. Dispositif d'étanchéité (10) selon l'une quelconque des revendications 1 à 7, **caractérisé en ce que** ledit bouchon de type à boulon (20) est doté d'au moins un canal passant (52), qui est orienté le long dudit axe de rotation central (A) dans un but de purge, d'aération et d'inspection.

9. Dispositif d'étanchéité (10) selon la revendication 8, **caractérisé en ce que** ledit poussoir anti-rotation (36) est doté d'au moins un conduit passant (54) qui est aligné avec un canal passant correspondant (52) dudit bouchon de type à boulon (20), dans un but de purge, d'aération et d'inspection, de préférence dans lequel ledit conduit passant (54) est fileté intérieurement.

10. Dispositif d'étanchéité (10) selon la revendication 9, **caractérisé en ce que** ledit conduit passant (54) présente un diamètre intérieur qui est supérieur au diamètre intérieur dudit canal passant (52) et est fileté intérieurement, de sorte que le filetage intérieur dudit conduit passant (54) permette d'insérer au moins partiellement un outil d'extraction fileté correct dans ledit conduit passant (54) à des fins de démontage.

11. Dispositif d'étanchéité (10) selon l'une quelconque des revendications 1 à 10, **caractérisé en ce que** ledit poussoir anti-rotation (36), ledit anneau fileté (38) et ledit bouchon de type à boulon (20) sont fabriqués avec le même matériau, de sorte que ledit poussoir anti-rotation (36), ledit anneau fileté (38) et ledit bouchon de type à boulon (20) présentent sensiblement la même dureté.

12. Dispositif d'étanchéité (10) selon l'une quelconque des revendications 1 à 11, **caractérisé en ce que** la dureté dudit joint en forme de disque (30) est inférieure à la dureté dudit poussoir anti-rotation (36), dudit anneau fileté (38) et dudit bouchon de type à boulon (20).

**13.** Dispositif d'étanchéité (10) selon l'une quelconque des revendications 1 à 12, **caractérisé en ce que** ledit bouchon de type à boulon (20), ledit ensemble de poussoir (36, 38) et ledit joint en forme de disque (30) sont constitués de matériaux métalliques.

**14.** Procédé d'assemblage du dispositif d'étanchéité (10) selon l'une quelconque des revendications précédentes à l'intérieur d'un alésage (12) obtenu sur une partie de collecteur (14) d'un échangeur thermique, le procédé comprenant les étapes consistant à :

- fournir un orifice passant dans ladite partie de collecteur (14) avec des opérations de perçage multiples, afin d'obtenir un alésage (12) comprenant en séquence une première partie d'alésage (56) avec un premier diamètre prédéfini (X), une deuxième partie d'alésage (58) avec un deuxième diamètre prédéfini (Y) et une troisième partie d'alésage (60) avec un troisième diamètre prédéfini (Z), dans lequel ledit premier diamètre prédéfini (X) est inférieur audit deuxième diamètre prédéfini (Y), dans lequel ledit deuxième diamètre prédéfini (Y) est inférieur audit troisième diamètre prédéfini (Z) et dans lequel la longueur axiale (H) de ladite deuxième partie d'alésage (58) est supérieure à la somme de l'épaisseur prédéfinie (G) dudit joint en forme de disque (30) et de la première épaisseur prédéfinie (C1) de la première saillie (42A) dudit poussoir anti-rotation (36) ;
- fournir un filetage intérieur dans au moins ladite troisième partie d'alésage (60) ;
- insérer ledit joint en forme de disque (30) dans ladite deuxième partie d'alésage (58) jusqu' à une première paroi de butée circonférentielle (62) dudit alésage (12), dans lequel ladite première paroi de butée circonférentielle (62) est située entre ladite première partie d'alésage (56) et ladite deuxième partie d'alésage (58) ;
- insérer la deuxième saillie (42B) dudit poussoir anti-rotation en forme de disque (36) dans l'ouverture passante (48) dudit anneau fileté de manière circonférentielle (38) dans une configuration d'accouplement, de façon à former ledit ensemble de poussoir (36, 38) de telle sorte que ladite deuxième saillie (42B) se projette à travers ladite ouverture (48) ;
- insérer ledit ensemble de poussoir (36, 38) dans ledit alésage (12) en vissant ledit anneau fileté de manière circonférentielle (38) dans le filetage intérieur de ladite troisième partie d'alésage (60), de sorte que ledit anneau fileté de manière circonférentielle (38) ne peut plus tourner en s'arrêtant contre une deuxième paroi de butée circonférentielle (64) dudit alésage (12), dans lequel ladite deuxième paroi de butée circonférentielle (64) est située entre ladite deuxième partie d'alésage (58) et ladite troisième partie d'alésage (60), et de telle sorte que ladite surface de poussoir (40) entre dans ladite deuxième partie d'alésage (58) pour adhérer à la surface de contact (34) dudit joint (30) ;
- insérer ledit bouchon de type à boulon (20) dans ledit alésage (12) en vissant la tige (24) dudit bouchon de type à boulon (20) dans le filetage intérieur de ladite troisième partie d'alésage (60), de telle sorte que la surface de base (28) de ladite tige (24) fait face à ladite deuxième saillie (42B) ; et
- appliquer un couple de serrage audit bouchon de type à boulon (20), de telle sorte que la surface de base (28) de ladite tige (24) adhère à ladite deuxième saillie (42B) pour pousser ledit joint (30) dans sa position d'étanchéité contre ladite première paroi de butée circonférentielle (62) dudit alésage (12).

*Fig. 1 (Prior Art)*

**Fig. 2 (Prior Art)**

*Fig. 3*

EP 4 067 719 B1

*Fig. 4*

*Fig. 5*

EP 4 067 719 B1

*Fig. 6*

EP 4 067 719 B1

*Fig. 7*

*Fig. 8*

**EP 4 067 719 B1**

**Patent documents cited in the description**

- EP 0482865 A2